# EUROPÄISCHE PATENTSCHRIFT

(11) **EP 4 129 894 B1**
(45) Veröffentlichungstag und Bekanntmachung des Hinweises auf die Patenterteilung: **29.05.2024**
(21) Anmeldenummer: 22185184.3
(22) Anmeldetag: 15.07.2022
(51) Int. Cl.: C01B 3/34

(54) **VERFAHREN ZUM ANFAHREN EINER VORRICHTUNG ZUR DAMPFREFORMIERUNG UND VORRICHTUNG**
METHOD FOR STARTING A STEAM REFORMING APPARATUS AND APPARATUS
PROCÉDÉ DE DÉMARRAGE D'UN DISPOSITIF DE VAPOREFORMAGE ET DISPOSITIF

(30) Priorität: 05.08.2021 DE 102021208532; 05.08.2021 BE 202105628
(43) Veröffentlichungstag der Anmeldung: 08.02.2023
(73) Patentinhaber: thyssenkrupp Uhde GmbH, 44141 Dortmund (DE); thyssenkrupp AG, 45143 Essen (DE)
(72) Erfinder: Meißner, Christoph, 44534 Lünen (DE); Langanki, Michael, 77833 Ottersweier (DE); Mielke, Bernd, 58454 Witten (DE); Nölker, Klaus, 44265 Dortmund (DE); Kubasch, Lukas, 44141 Dortmund (DE)
(74) Vertreter: thyssenkrupp Intellectual Property GmbH

(56) Entgegenhaltungen:
- CN-B- 106 430 789
- DE-A1-102007 027 397
- DE-A1-102018 210 921

## Beschreibung

Die Erfindung betrifft ein Verfahren zum Anfahren einer Vorrichtung zur Dampfreformierung, um Emissionen in dieser Phase zu vermeiden.

Bei der Dampfreformierung werden Kohlenwasserstoffe - insbesondere Methan - mit Wasserdampf und anschließend mit einem Unterschuss an Sauerstoff zu Kohlenmonoxid und Wasserstoff umgesetzt. In der anschließenden Wassergas-Shift-Reaktion wird das erzeugte Kohlenmonoxid mit Wasserdampf zu Wasserstoff und Kohlendioxid umgesetzt. Nach diesem Prozess wird der Gasgemisch üblicherweise abgekühlt, wobei ein Kondensat entsteht. Dieses Kondensat enthält neben dem Wasser auch entstandene organische Nebenprodukte, beispielsweise Methanol, Ameisensäure oder Essigsäure. Um diese Nebenprodukte aus dem Kondensat zu entfernen, wird das Kondensat durch einen Kondensatstripper geführt. Der Kondensatstripper ist üblicherweise eine Kolonne, in welcher mittels Wasserdampf unter Druck die organischen Bestandteile aus dem Kondensat desorbiert werden. Das gestrippte Kondensat kann anschließend beispielsweise demineralisiert werden und anschließend wieder einem Dampferzeugungskessel zugeführt werden.

Während der Prozess im Kondensatstripper im laufenden Prozess zuverlässig ist, ist das Anfahren ein kritischer Punkt. Um thermische Probleme innerhalb der Kolonne zu vermeiden, wird die Kolonne zunächst mit dem Kondensat durchströmt und anschließend vorsichtig mit Wasserdampf erwärmt, bis der stationäre Zustand hinsichtlich einer homogenen Temperaturverteilung eingestellt ist. Da in dieser Anfahrphase dadurch die organischen Komponenten nicht oder wenigstens nicht vollständig aus dem Kondensat entfernt werden, wird dieses verunreinigte Kondensat beispielsweise in einem Lagertank aufgefangen und später dem laufenden Kondensatstripper im stationären Zustand wieder zugeführt. Dieses bedeutet, dass ein zusätzlicher Tank und entsprechende Fördereinrichtungen hierfür bereitgestellt werden müssen, was die Investkosten und die Größe der Anlage erhöht. Alternativ kann das in dem Tank gelagerte Kondensat einer gesonderten Entsorgung oder einer externen Behandlung zugeführt werden, was mit hohen laufenden Kosten verbunden ist.

Aus der DE 10 2007 027 397 A1 ist ein Verfahren zum Kühlen eines Wasserstoffes und Wasserdampf enthaltenden Prozessgases aus einer Wasserstoffrückgewinnungsanlage bekannt.

Aus der US 9,266,056 B2 ist ein Verfahren zum Anfahren einer Trennvorrichtung bekannt.

DE 10 2018 210921 A1 offenbart eine Anlage zur Herstellung von wasserstoffhaltigen Synthesegas mindestens umfassend einen Reformer, einen Kohlenmonoxid-Konverter, einen Synthesegas-Kondensator und eine Kohlendioxid-Wäschereinheit mit Regeneration. Der Synthesegas-Kondensator ist mit einem Deaerator verbunden und der Deaerator ist mit einem Reformerbrenner und/oder einem befeuerten Hilfsdampfkessel verbunden.

Aufgabe der Erfindung ist es, ein Verfahren und eine Vorrichtung bereitzustellen, welche einfach angefahren werden kann, ohne einen zusätzlichen Tank oder weitere Installationen für nicht behandeltes Kondensat aufzuweisen.

Gelöst wird diese Aufgabe durch die Vorrichtung mit den in Anspruch 1 angegebenen Merkmalen, das Verfahren zum Anfahren einer Vorrichtung zur Dampfreformierung mit den in Anspruch 4 angegebenen Merkmalen sowie das Verfahren zur kurzzeitigen Deaktivierung einer Vorrichtung zur Dampfreformierung mit den in Anspruch 5 angegebenen Merkmalen. Vorteilhafte Weiterbildungen ergeben sich aus den Unteransprüchen, der nachfolgenden Beschreibung sowie den Zeichnungen.

Die erfindungsgemäße Vorrichtung dient zur Dampfreformierung. Üblicherweise werden dabei Kohlenwasserstoffe - insbesondere Methan - mit Wasserdampf und mit einem Unterschuss an Sauerstoff zunächst zu Kohlenmonoxid und Wasserstoff umgesetzt und anschließend das Kohlenmonoxid mit weiterem Wasserdampf in der Wassergas-Shift-Reaktion zu Kohlendioxid und Wasserstoff. Anschließend wird üblicherweise das Kohlendioxid abgetrennt. Daher wird das Gasgemisch nach der Dampfreformierung abgekühlt, wodurch Wasser als Kondensat entsteht. Dieses Kondensat weist üblicherweise Verunreinigungen auf, welche insbesondere aus Nebenprodukten der vorgenannten Reaktionen bestehen und bei denen es sich beispielsweise um Methanol, Ameisensäure oder Essigsäure handeln kann.

Die Vorrichtung zur Dampfreformierung weist einen Reaktor, einen Kondensatabscheider, einen Kondensatstripper und einen Dampfkessel auf. Der Reaktor ist zur Erzeugung von Wasserstoff ausgebildet, hier findet also die eigentliche Dampfreformierung und die Wassergas-Shift-Reaktion statt. Im Sinne der Erfindung kann der Reaktor auch aus zwei oder mehr getrennten Einheiten bestehen, in denen beispielsweise unterschiedliche Reaktionsschritte ablaufen, beispielsweise ein erster Reaktorteil für die Reaktion von Methan mit Wasserdampf, ein zweiter Reaktorteil für die Reaktion von Methan mit Sauerstoff und ein dritter Reaktorteil und vierter Reaktorteil für die Hochtemperatur und Niedrigtemperatur-Wassergas-Shift-Reaktion. Für die eigentliche Erfindung ist es irrelevant ob der Reaktor ein gemeinsames Gehäuse aufweist oder ob der Reaktor aus einer Reihe von hintereinander geschalteten Reaktorteilen besteht. Der Kondensatabscheider dient dazu, auskondensiertes Wasser aus dem Produktgasstrom abzutrennen. Der Kondensatabscheider kann also beispielsweise ein Wärmetauscher mit einem geeigneten Volumen zur Trennung von Gas- und Flüssigphase sowie zur Speicherung von Kondensat sein. Es kann auch eine Anordnung von einem Wärmetauscher und einem nachgeschalteten Abscheider sein. Der Kondensatstripper dient dazu, verdampfbare Komponenten aus einer Flüssigkeit desorptiv zu entfernen. Beispielsweise kann ein Kondensatstripper als Bodenkolonne, als Kolonne mit strukturierten Packungen oder als Füllkörperkolonne ausgeführt sein. Der Dampfkessel dient der Erzeugung von Wasserdampf aus flüssigem Wasser. Für die weiteren Prozesse kann der Wasserdampf auch in nachgelagerten Schritten weiter erhitzt werden.

Der Reaktor ist so mit dem Kondensatabscheider verbunden, dass das erzeugte Gasgemisch aus dem Reaktor in den Kondensatabscheider geführt wird. Der Kondensatabscheider und der Kondensatstripper sind so miteinander verbunden, dass das im Kondensatabscheider abgeschiedene Kondensat in den Kondensatstripper geführt wird.

Der Kondensatabscheider und der Dampfkessel sind so miteinander verbunden, dass gereinigtes Kondensat aus dem Kondensatstripper in den Dampfkessel geführt werden kann. Hierbei wird das Kondensat bevorzug über eine Vorrichtung zur Demineralisierung aus dem Kondensatstripper in den Dampfkessel geführt. Weiter bevorzugt ist zwischen der Vorrichtung zur Demineralisierung und dem Dampfkessel eine Vorrichtung zur Entgasung angeordnet, in welcher beispielsweise und insbesondere Sauerstoff und Kohlendioxid aus dem Wasser entfernt werden.

Der Dampfkessel ist dampfführend mit dem Reaktor verbunden und ebenso ist der Dampfkessel dampfführend mit dem Kondensatstripper verbunden. Hierbei kann zwischen dem Dampfkessel und dem Reaktor ein oder mehrere Überhitzer angeordnet sein. Ebenso kann zwischen dem Dampfkessel und dem Kondensatstripper ein oder mehrere Überhitzer angeordnet sein. Überhitzer können beispielsweise in Form von Wärmetauschern ausgeführt sein.

Erfindungsgemäß ist die Kesselwasserzuleitung des Dampfkessels flüssigkeitsführend mit dem Kondensatstripper verbindbar. Die Verbindung ist also so ausgeführt, dass über diese Verbindung flüssiges Wasser aus der Kesselwasserzuleitung des Dampfkessels entnommen und dem Kondensatstripper zugeführt werden kann. Wesentlich ist, dass die Zuführung von flüssigem Wasser aus der Kesselwasserzuleitung des Dampfkessels an der gleichen Stelle des Kondensatstrippers erfolgt wie die Zuführung des Kondensats vom Kondensatabscheider. Dadurch ist es möglich, anstelle von Kondensat, sauberes Wasser aus der Kesselwasserzuleitung des Dampfkessels dem Kondensatstripper zuzuführen. Hierdurch wird es möglich, den Kondensatstripper anzufahren, bevor Kondensat aus dem Kondensatabscheider bereitgestellt wird. Dadurch ist der Kondensatstripper bereits auf Betriebstemperatur, wenn das erste (kontaminierte) Kondensat zugeführt wird, sodass die organischen Verunreinigungen bereits von Anfang an zuverlässig im Kondensatstripper entfernt werden können.

Unter verbindbar ist im Sinne der Erfindung jede zeitweise herstellbare Verbindung zu verstehen. Besonders bevorzugt handelt es sich um eine feste Verrohrung, welche mittels eines Ventils zu öffnen und zu schließen ist. Natürlich ist es auch möglich, eine temporäre Verbindung herzustellen, beispielsweise mit einem Schlauch. Wesentlich ist, dass nur gezielt Wasser aus der Kesselwasserzuleitung des Dampfkessels in den Kondensatstripper geführt wird.

In einer weiteren Ausführungsform der Erfindung führen die Kondensat-führende Verbindung zwischen dem Kondensatabscheider und dem Kondensatstripper und die flüssigkeitsführende Verbindung zwischen der Kesselwasserzuleitung des Dampfkessels und dem Kondensatstripper über einen gemeinsamen Anschluss in den Kondensatstripper. Beispielsweise sind die beiden Verbindungen über ein Ventil so mit dem Kondensatstripper verbunden, dass entweder Kondensat aus dem Kondensatabscheider oder Wasser aus der Kesselwasserzuleitung des Dampfkessels in den Kondensatstripper geleitet werden kann.

In einer weiteren Ausführungsform der Erfindung ist die Kesselwasserzuleitung des Dampfkessels flüssigkeitsführend über ein Ventil mit dem Kondensatstripper verbindbar.

Insbesondere wird das Prozessgas, welches den Kondensatabscheider verlässt, einem CO₂-Abscheider zugeführt und anschließend in einem Haber-Bosch-Prozess zu Ammoniak umgesetzt.

In einem weiteren Aspekt betrifft die Erfindung ein Verfahren zum Anfahren einer Vorrichtung zur Dampfreformierung, vorzugsweiser einer erfindungsgemäßen Vorrichtung. Das erfindungsgemäße Verfahren unterscheidet sich von herkömmlichen und dem Fachmann geläufigen Verfahren zum Anfahren einer Vorrichtung zur Dampfreformierung gerade dadurch, dass einem Kondensatstripper zunächst Wasser aus einer Kesselwasserzuleitung eines Dampfkessels zugeführt wird. Dieses Wasser weist eine ähnliche Temperatur wie das Kondensat auf (Abweichung von ± 40 K, bevorzugt ± 25 K). Da dieses Wasser aber sauber ist, werden hierdurch noch keine Kontaminationen in den Kondensatstripper eingebracht, sodass es unschädlich ist, dass der Kondensatstripper am Anfang nicht in der Lage ist, die Schadstoffe aus dem Wasser zu entfernen. Nachdem Wasser aus der Kesselwasserzuleitung des Dampfkessels in den Kondensatstripper geführt wurde, wird dem Kondensatstripper Dampf aus dem Dampfkessel zugeführt. Dieses kann nun so durchgeführt werden, dass der Kondensatstripper langsam auf Temperatur gebracht wird, wodurch eine starke thermische Belastung des Kondensatstrippers vermieden wird. In dieser Zeit wird das Wasser praktisch über den Weg einer Demineralisierungseinheit im Kreis gefahren. Da dieses Wasser keine Schadstoffe aufweist, entsteht hierdurch jedoch auch kein Problem, keine Flüssigkeit muss in einem Tank zwischengelagert oder entsorgt werden. Auch ist es hierdurch eben möglich, den Kondensatstripper anzufahren, bevor das Kondensat erzeugt wird, sodass der Kondensatstripper bereits im thermisch stationären Zustand ist, wenn das erste Kondensat in einem Kondensatabscheider anfällt. Erst nach Einstellung des thermischen Gleichgewichts wird die Zufuhr von Wasser der Kesselwasserzuleitung des Dampfkessels beendet und dafür wird Kondensat aus dem Kondensatabscheider zugeführt. Somit steht ab dem Moment, in dem belastetes Kondensat zugeführt wird, schon die volle Trennleistung des Kondensatstrippers zur Verfügung. Durch das erfindungsgemäße Verfahren lässt sich somit der Einbau eines entsprechenden Tanklagers zur Speicherung von ungereinigtem Prozesskondensat für den Anfahrprozess vermeiden.

In einem weiteren Aspekt betrifft die Erfindung ein Verfahren zur kurzzeitigen Deaktivierung einer Vorrichtung zur Dampfreformierung, vorzugsweiser einer erfindungsgemäßen Vorrichtung. Hierzu wird einem Kondensatstripper Wasser aus einer Kesselwasserzuleitung eines Dampfkessels zugeführt, sobald die Zufuhr von Kondensat aus einem Kondensatabscheider beendet wird. Dieses führt dazu, dass der Kondensatstripper kontinuierlich am optimalen thermischen und hydraulischen Betriebspunkt weitergefahren werden kann, wenn die Dampfreformierung kurzzeitig deaktiviert werden muss. Dazu wird weiter kontinuierlich dem Kondensatstripper Dampf aus dem Dampfkessel zugeführt. Wird später die Dampfreformierung wieder begonnen, so befindet sich der Kondensatstripper bereits am optimalen thermischen und hydraulischen Betriebspunkt, sodass beim erneuten Anfahren der Vorrichtung zur Dampfreformierung die Zufuhr von Wasser aus der Kesselwasserzuleitung des Dampfkessels beendet werden kann und dafür Kondensat aus dem Kondensatabscheider zugeführt wird.

Nachfolgend ist die erfindungsgemäße Vorrichtung im Vergleich zum Stand der Technik anhand eines in den Zeichnungen dargestellten Ausführungsbeispiels näher erläutert.
- Fig. 1: Stand der Technik

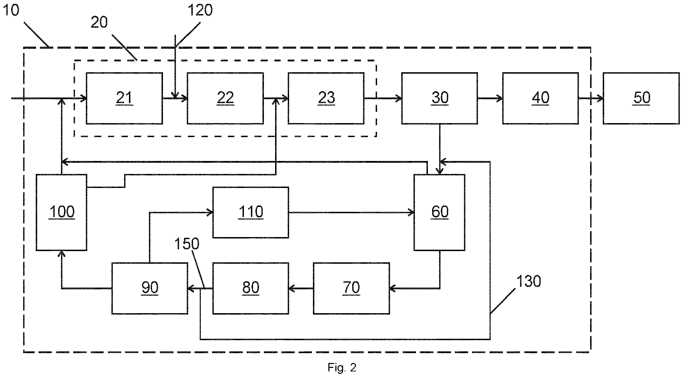

- Fig. 2: erfindungsgemäße Vorrichtung

Gleiche Teile sind mit gleichen Bezugszeichen versehen. Die Pfeile geben die Flussrichtung innerhalb der Verbindungen an.

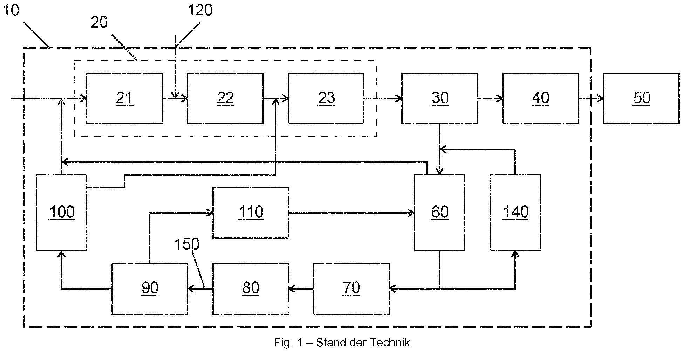

In Fig. 1 ist zunächst eine Vorrichtung zur Dampfreformierung 10 nach dem Stand der Technik gezeigt. Diese weist einen Reaktor 10, einen Kondensatabscheider 30 und einen CO₂-Abscheider 40 auf. Das so erzeugte Gasgemisch kann beispielsweise einer Vorrichtung für das Haber-Bosch-Verfahren 50 zugeführt werden. Weiter weist die Vorrichtung zur Dampfreformierung 10 einen Wasserkreislauf auf. Dieser umfasst einen Kondensatstripper 60, in dem organische Bestandteile aus dem Kondensat entfernt werden. Das gereinigte Kondensat läuft aus dem Kondensatstripper 60 über eine Demineralisierungsvorrichtung 70 und eine Entgasungsvorrichtung 80 in den Dampfkessel 90. Dort wird das Wasser erhitzt und verdampft. Der Dampf kann über einen optionalen ersten Überhitzer 100 in den Reaktor geleitet werden. Ebenso kann Dampf aus dem Dampfkessel 90 über einen optionalen zweiten Überhitzer 110 in den Kondensatstripper 60 geführt werden. Dieser Dampf nimmt die flüchtigen organischen Bestandteile auf und wird zu deren weiterer Umsetzung in den Reaktor 20 geführt. Der Reaktor 20 ist in dem gezeigten Beispiel dreiteilig aufgebaut. In einem ersten Reaktorteil 21 wird Methan mit Wasserdampf umgesetzt, zwischen dem ersten Reaktorteil 21 und dem zweiten Reaktorteil 22 wird über eine Luftzufuhr 120 Luft zugeführt, sodass im zweiten Reaktorteil 22 eine oxidative Umsetzung erfolgt. Zwischen dem zweiten Reaktorteil 22 und dem dritten Reaktorteil 23 wird erneut Wasserdampf zugegeben, sodass im dritten Reaktorteil 23 eine Wassergas-Shift-Reaktion erfolgt. Diese Prozesse laufen im stabilen Betrieb ab. Wird jedoch die Vorrichtung zur Dampfreformierung 10 erst angefahren, so sind die Prozesse noch nicht in einem eingeschwungenen Zustand. Insbesondere kann in dem Kondensatstripper 60 keine Entfernung der organischen Verunreinigungen aus dem Kondensat erreicht werden. Daher wird das Kondensat zunächst in einen Lagertank 140 geleitet und dann später im Regelbetrieb erneut dem Kondensatstripper 60 zugeführt.

Im Unterschied hierzu zeigt Fig. 2 eine erfindungsgemäße Vorrichtung zur Dampfreformierung 10. Diese unterscheidet sich dadurch, dass der Lagertank 140 weggelassen werden kann und dafür eine erfindungsgemäße Verbindung 130 zwischen der Entgasungsvorrichtung 80 und dem Dampfkessel 90 und dem Kondensatstripper 60 bereit gestellt wird und zwar so, dass warmes Wasser mit ungefähr der gleichen Temperatur (Abweichung ± 40 K, bevorzugt ± 25 K) aus dem Dampfkessel 90 an die gleiche Stelle wie das Kondensat aus dem Kondensatabscheider 30 in den Kondensatstripper 60 geleitet werden kann. Nun wird also der Kondensatstripper frühzeitig mit warmem Wasser aus der Kesselwasserzuleitung 150 des Dampfkessels 90 und Wasserdampf angefahren und in den thermisch stationären Zustand gebracht, bevor das Kondensat im Kondensatabscheider 30 anfällt. Hierdurch wird jede Zwischenlagerung vermieden.

### Bezugszeichen

- 10: Vorrichtung zur Dampfreformierung
- 20: Reaktor
- 21: erster Reaktorteil
- 22: zweiter Reaktorteil
- 23: dritter Reaktorteil
- 30: Kondensatabscheider
- 40: CO₂-Abscheider
- 50: Vorrichtung für das Haber-Bosch-Verfahren
- 60: Kondensatstripper
- 70: Demineralisierungsvorrichtung
- 80: Entgasungsvorrichtung
- 90: Dampfkessel
- 100: erster Überhitzer
- 110: zweiter Überhitzer
- 120: Luftzufuhr
- 130: erfindungsgemäße Verbindung
- 140: Lagertank
- 150: Kesselwasserzuleitung

## Patentansprüche

1. Vorrichtung zur Dampfreformierung (10), wobei die Vorrichtung zur Dampfreformierung (10) einen Reaktor (20), einen Kondensatabscheider (30), einen Kondensatstripper (60) und einen Dampfkessel (90) aufweist, wobei der Reaktor (20) zur Erzeugung von Wasserstoff ausgebildet ist, wobei der Reaktor (20) so mit dem Kondensatabscheider (30) verbunden ist, dass das erzeugte Gasgemisch aus dem Reaktor (20) in den Kondensatabscheider (30) geführt wird, wobei der Kondensatabscheider (30) und der Kondensatstripper (60) so miteinander verbunden sind, dass das im Kondensatabscheider (30) abgeschiedene Kondensat in den Kondensatstripper (60) geführt wird, wobei der Kondensatabscheider (30) und der Dampfkessel (90) so miteinander verbunden sind, dass gereinigtes Kondensat aus dem Kondensatstripper (60) in den Dampfkessel (90) geführt werden kann, wobei der Dampfkessel (90) dampfführend mit dem Reaktor (20) verbunden ist, wobei der Dampfkessel (90) dampfführend mit dem Kondensatstripper (60) verbunden ist, **dadurch gekennzeichnet, dass** die Kesselwasserzuleitung (150) des Dampfkessels (90) flüssigkeitsführend mit dem Kondensatstripper (60) verbindbar ist, wobei die Zuführung aus der Kesselwasserzuleitung (150) des Dampfkessels (90) an der gleichen Stelle des Kondensatstrippers (60) erfolgt wie die Zuführung des Kondensats vom Kondensatabscheider (30).

2. Vorrichtung zur Dampfreformierung (10) nach Anspruch 1, **dadurch gekennzeichnet, dass** die Kondensat-führende Verbindung zwischen dem Kondensatabscheider (30) und dem Kondensatstripper (60) und die flüssigkeitsführende Verbindung zwischen der Kesselwasserzuleitung (150) des Dampfkessels (90) und dem Kondensatstripper (60) über einen gemeinsamen Anschluss in den Kondensatstripper (60) führen.

3. Vorrichtung zur Dampfreformierung (10) nach einem der vorstehenden Ansprüche, **dadurch gekennzeichnet, dass** die Kesselwasserzuleitung (150) des Dampfkessels (90) flüssigkeitsführend über ein Ventil mit dem Kondensatstripper (60) verbindbar ist.

4. Verfahren zum Anfahren einer Vorrichtung zur Dampfreformierung (10), **dadurch gekennzeichnet, dass** einem Kondensatstripper (60) zunächst Wasser aus einer Kesselwasserzuleitung (150) eines Dampfkessels (90) zugeführt wird, anschließend dem Kondensatstripper (60) Dampf aus dem Dampfkessel (90) zugeführt wird und nach Einstellung des thermischen Gleichgewichts die Zufuhr von Wasser aus der Kesselwasserzuleitung (150) des Dampfkessels (90) beendet wird und dafür Kondensat aus einem Kondensatabscheider (30) zugeführt wird.

5. Verfahren zur kurzzeitigen Deaktivierung einer Vorrichtung zur Dampfreformierung (10), **dadurch gekennzeichnet, dass** einem Kondensatstripper (60) Wasser aus einer Kesselwasserzuleitung (150) eines Dampfkessels (90) zugeführt wird, sobald die Zufuhr von Kondensat aus einem Kondensatabscheider (30) beendet ist, wobei kontinuierlich dem Kondensatstripper (60) Dampf aus dem Dampfkessel (90) zugeführt wird, wobei beim erneuten Anfahren der Vorrichtung zur Dampfreformierung (10) die Zufuhr von Wasser aus der Kesselwasserzuleitung (150) des Dampfkessels (90) beendet wird und dafür Kondensat aus dem Kondensatabscheider (30) zugeführt wird.

## Claims

1. Apparatus for steam reforming (10), wherein the apparatus for steam reforming (10) comprises a reactor (20), a condensate separator (30), a condensate stripper (60) and a steam boiler (90), wherein the reactor (20) is designed to produce hydrogen, wherein the reactor (20) is connected to the condensate separator (30) in such a way that the gas mixture produced is conducted from the reactor (20) into the condensate separator (30), wherein the condensate separator (30) and the condensate stripper (60) are connected to each other in such a way that the condensate separated out in the condensate separator (30) is conducted into the condensate stripper (60), wherein the condensate separator (30) and the steam boiler (90) are connected to each other in such a way that cleaned condensate from the condensate stripper (60) can be conducted into the steam boiler (90), wherein the steam boiler (90) is connected to the reactor (20) in a steam-conducting manner, wherein the steam boiler (90) is connected to the condensate stripper (60) in a steam-conducting manner, **characterized in that** the boiler water feed line (150) of the steam boiler (90) is connectable to the condensate stripper (60) in a liquid-conducting manner, wherein the supply from the boiler water feed line (150) of the steam boiler (90) is at the same place of the condensate stripper (60) as the supply of the condensate from the condensate separator (30).

2. Apparatus for steam reforming (10) according to Claim 1, **characterized in that** the condensate-conducting connection between the condensate separator (30) and the condensate stripper (60) and the liquid-conducting connection between the boiler water feed line (150) of the steam boiler (90) and the condensate stripper (60) lead into the condensate stripper (60) via a common connection.

3. Apparatus for steam reforming (10) according to either of the preceding claims, **characterized in that** the boiler water feed line (150) of the steam boiler (90) is connectable to the condensate stripper (60) in a liquid-conducting manner via a valve.

4. Method of starting up an apparatus for steam reforming (10), **characterized in that** a condensate stripper (60) is first supplied with water from a boiler water feed line (150) of a steam boiler (90), then the condensate stripper (60) is supplied with steam from the steam boiler (90) and, after establishment of thermal equilibrium, the feed of water from the boiler water feed line (150) of the steam boiler (90) is ended and instead, condensate is supplied from a condensate separator (30).

5. Method of short-term deactivation of an apparatus for steam reforming (10), **characterized in that** a condensate stripper (60) is supplied with water from a boiler water feed line (150) of a steam boiler (90) as soon as the feed of condensate from a condensate separator (30) has ended, wherein the condensate stripper (60) is continuously supplied with steam from the steam boiler (90), wherein, on starting up of the apparatus for steam reforming (10) again, the supply of water from the boiler water feed line (150) of the steam boiler (90) is ended and instead, condensate is supplied from the condensate separator (30).

## Revendications

1. Dispositif de reformage à la vapeur (10), le dispositif de reformage à la vapeur (10) comprenant un réacteur (20), un séparateur de condensat (30), un stripeur de condensat (60) et une chaudière à vapeur (90), le réacteur (20) étant conçu pour produire de l'hydrogène, le réacteur (20) étant relié au séparateur de condensat (30) de telle manière, que le mélange de gaz produit est conduit du réacteur (20) dans le séparateur de condensat (30), le séparateur de condensat (30) et le stripeur de condensat (60) étant reliés entre eux de telle sorte que le condensat séparé dans le séparateur de condensat (30) est conduit dans le stripeur de condensat (60), le séparateur de condensat (30) et la chaudière à vapeur (90) étant reliés l'un à l'autre de telle sorte que le condensat purifié peut être amené de l'extracteur de condensat (60) dans la chaudière à vapeur (90), la chaudière à vapeur (90) étant reliée au réacteur (20) de manière à conduire la vapeur, la chaudière à vapeur (90) étant reliée à l'extracteur de condensat (60) de manière à conduire la vapeur, **caractérisé en ce que** la conduite d'amenée d'eau de chaudière (150) de la chaudière à vapeur (90) peut être reliée au séparateur de condensat (60) en guidant le liquide, l'amenée à partir de la conduite d'amenée d'eau de chaudière (150) de la chaudière à vapeur (90) se faisant au même endroit du séparateur de condensat (60) que l'amenée du condensat à partir du séparateur de condensat (30).

2. Dispositif de reformage à la vapeur (10) selon la revendication 1, **caractérisé en ce que** la liaison conduisant le condensat entre le séparateur de condensat (30) et le séparateur de condensat (60) et la liaison conduisant le liquide entre la conduite d'alimentation en eau de chaudière (150) de la chaudière à vapeur (90) et le séparateur de condensat (60) mènent dans le séparateur de condensat (60) par un raccordement commun.

3. Dispositif de reformage à la vapeur (10) selon l'une des revendications précédentes, **caractérisé en ce que** la conduite d'amenée d'eau de chaudière (150) de la chaudière à vapeur (90) peut être reliée à l'extracteur de condensat (60) en conduisant le liquide par une vanne.

4. Procédé de démarrage d'un dispositif de reformage à la vapeur (10), **caractérisé en ce qu'**un stripeur de condensat (60) est d'abord alimenté en eau à partir d'une conduite d'alimentation en eau de chaudière (150) d'une chaudière à vapeur (90), **en ce que** le stripeur de condensat (60) est ensuite alimenté en vapeur à partir de la chaudière à vapeur (90) et **en ce qu'**après l'ajustement de l'équilibre thermique, l'alimentation en eau à partir de la conduite d'alimentation en eau de chaudière (150) de la chaudière à vapeur (90) est arrêtée et **en ce que**, en contrepartie, du condensat est alimenté à partir d'un séparateur de condensat (30).

5. Procédé de désactivation temporaire d'un dispositif de reformage à la vapeur (10), **caractérisé en ce qu'**un séparateur de condensat (60) est alimenté en eau depuis une conduite d'alimentation en eau de chaudière (150) d'une chaudière à vapeur (90) dès que l'alimentation en condensat depuis un séparateur de condensat (30) est terminée, dans lequel de la vapeur provenant de la chaudière à vapeur (90) est amenée en continu à l'extracteur de condensat (60), dans lequel, lors d'un nouveau démarrage du dispositif de reformage à la vapeur (10), l'amenée d'eau provenant de la conduite d'amenée d'eau de chaudière (150) de la chaudière à vapeur (90) est terminée et du condensat provenant du séparateur de condensat (30) est amené à la place.
